# EUROPÄISCHE PATENTANMELDUNG

(11) **EP 2 072 816 A1**
(43) Veröffentlichungstag der Anmeldung: **24.06.2009**
(21) Anmeldenummer: 07150051.6
(22) Anmeldetag: 17.12.2007
(51) Int. Cl.: F03G 3/00, B64G 1/40

(54) **Antriebssystem durch mechanische Impulswandlung, vorzugsweise für Flugkörper**

(71) Anmelder: Götz, Dietrich, 70378 Stuttgart (DE); Böttcher, Jost, 90455 Nürnberg (DE)
(72) Erfinder: Götz, Dietrich, 70378 Stuttgart (DE); Böttcher, Jost, 90455 Nürnberg (DE)
(74) Vertreter: Vossius & Partner

(57) **Zusammenfassung**

Gegenstand der Erfindung ist ein elektromechanisches Antriebssystem, welches nach dem Stoßprinzip auf autonome abgeschlossene Vehikel, vorzugsweise Raumflugkörper, unabhängig von Umgebungsmedien und äußeren Kräften ohne Massenverlust in zyklischer taktförmiger Arbeitsweise unter Energiezufuhr beständig Antriebsimpulse überträgt. Dabei verleihen sich in einer Antriebskammer eingeschlossene freie antriebswirksame Festkörper unterschiedlichen Trägheitscharakters zunächst gegensinnige Bewegungsimpulse in definierter, gerader, ebener Bahn und übertragen diese dann auf das Vehikel. Alle Wechselwirkungen sind so ausgelegt, dass sich als Bilanz innerer Kraftfreisetzung entsprechend den Erhaltungssätzen der Physik genau ein äußerer Impuls ergibt, der die lineare Beschleunigung des Vehikels bewirkt. Dies wird erreicht durch eine mehrstufige Stoßübertragung zwischen den antriebswirksamen Festkörpern, wobei es einseitig in Antriebsrichtung zum Auftreten eines zusätzlichen rotatorischen Zwischenimpulses und damit zur zweimaligen Wechselübertragung zwischen translatorischen und rotatorischen Impulsen kommt. Dabei ergibt sich unmittelbar aus dieser Stoßabfolge und dem Unterschied von Massenträgheit und Massenträgheitsmoment eine besondere Konsequenz des Impulserhaltungssatzes.

## Beschreibung

Die Erfindung bezieht sich auf die mechanische Impulserzeugung an autonomen, abgeschlossenen, formkonstanten und komplexen technischen Körpern (z.B. Raumflugkörper) durch innere Kraftfreisetzung als Folge von Energiezufuhr.

Autonom heißt wechselwirkungsfrei gegen die Umgebung (feldschwaches Hochvakuum: Weltraum), abgeschlossen heißt mit konstanter Masse.

Gegenstand der Erfindung ist der technische Sonderfall, in dem die Erhaltungssätze der Physik eine geradlinige Beschleunigung solcher Körper ermöglichen.

Die Bewegung und die Beschleunigung von Körpern allgemein und speziell von technischen Vehikeln ist die Folge der Einwirkung äußerer Kräfte (Stoß, Anschub, Zug) oder der Freisetzung innerer Kräfte (Motor, Triebwerk). Ein Sonderfall ist die geradlinig beschleunigte Fortbewegung eines Raumflugkörpers im masse- und feldarmen Raum (Hochvakuum mit kompensierten oder irrelevanten Gravitationskräften) durch Rückstoßkräfte.

Hier kommen derzeit nur Raketentriebwerke zur Anwendung, deren Prinzip der schuberzeugende gerichtete irreversible Ausstoß hochbeschleunigter Gase ist. Die Triebwerke arbeiten "auf Verlust", der mitzuführende Vorrat an "Arbeitsmasse" ist begrenzt. Für eine hohe Leistung ist die Konstruktion so ausgelegt, dass "Arbeitsmasse" und Energieträger (Treibstoff + Oxydator) identisch sind.

Bekannte Alternativen (z.B. ein durch elektromagnetische Kräfte beschleunigtes Plasma als "Arbeitsmasse") erhöhen bei niedrigerem Schub geringfügig den Gesamtwirkungsgrad. In solchen Fällen ist die Energiequelle (nuklear, solar) von der "Arbeitsmasse" getrennt. Das Problem der Begrenzung des maximal erzielbaren Flugkörperimpulses durch den Vorrat an "Arbeitsmasse" bleibt jedoch weiterhin bestehen. Ein Triebwerk, welches ohne Masseverlust nur noch energieabhängig arbeiten würde, wiese entscheidende Leistungsvorteile selbst bei niedrigem spezifischem Antriebsimpuls auf. Ein damit angetriebener Flugkörper könnte aufgrund der nahezu unbegrenzten Beschleunigungsdauer eine bisher nicht realisierbare Höchstgeschwindigkeit und Steuerungsmöglichkeit erhalten.

Nach üblichem physikalischen Verständnis geht man davon aus, dass sich weder
1. Körper, auf die keine äußeren Kräfte wirken, noch
2. Systeme von Körpern, in denen nur innere Kräfte wirken,
fortbewegen können.
Der Masseschwerpunkt eines solchen Körpers oder Systems bleibe unverändert. Die erste Aussage ist axiomatisch (1. Newtonsches Grundgesetz), die zweite Aussage ist lediglich eine verbreitete Interpretation. Sie gilt für Modelle von Systemen von Punktmassen. Punktmassen haben keine Masseträgkeitsmomente, Körper hingegen stets.

Bei abgeschlossenen Körpersystemen, die auch als ein Komplexkörper in Erscheinung treten können, ist zunächst zu bedenken, dass für alle Körper, die Elemente des Systems sind, die auf sie einwirkenden äußeren Kräfte zugleich systembezogene innere Kräfte sind.
Aus dem Dualismus von gleichzeitig innerer und äußerer Kraftwirkung ergeben sich Konsequenzen für den inneren und äußeren Charakter von Impulsen.
Folgerichtig fordert der Impulserhaltungssatz für ein geschlossenes System von Körpern, in dem nur innere Kräfte wirken, eine konstante Impulssumme - sinngemäß bezogen auf Impulsbeträge, Impulsvektoren und eine beliebige Bewegungsabfolge-, nicht aber eine bestimmte Bilanz zwischen inneren und äußeren Impulsen.

Das technische Gebiet betreffend wird verwiesen auf die DE 199 29 128 A1, DE 39 02 221 A1, DE 43 12 188 A1,DE 29 01 612 A1, DE 40 10 758 A1, DE 41 14 910 A1, DE 100 47 799 A1, FR 2 642 473 A1, FR 2 805 312 A1 und FR-A-2 608 689. In diesen Schriften finden antriebswirksame Krafteinwirkungen zwischen dem Flugkörper (Gesamtsystem) und bestimmten eingebundenen Antriebsmassen statt, die jeweils nur einen Bewegungsvektor aufweisen. Die physikalisch unabdingbaren betragsgleichen Gegenkräfte, die einer gemeinsamen Antriebsbeschleunigung entgegenstehen, sollen sich über bestimmte erfindungsgemäße Effekte auflösen.

Dies alles soll im geschlossenen System, meist in einer Kammer, vonstatten gehen. Immer als unverzichtbar angesehen wird die Umwandlung kinetischer Energie in nichtkinetische Energie, ohne die eine einseitige Impulsminderung nicht soll zustande kommen können. Meist auf rein translatorische Bewegungen - gelegentlich unter Richtungsveränderung - bezogen, werden vereinzelt auch Rotationsbewegungen für notwendig erachtet.

Sofern auf translatorische Bewegungen Bezug genommen wird, betreffen diese stets nur "Massen", deren Ausführung und Eigenschaft als Körper nicht näher beschrieben wird. Sofern auf rotatorische Bewegungen Bezug genommen wird, sind diese grundsätzlich ohne systembezogene Massenschwerpunktsveränderung eines somit translatorisch ruhenden Rotors vorgesehen. Mehrfache, translatorisch -rotatorisch - translatorische Impulsartwechsel sind ebensowenig benannt, wie Gestaltungserfordernisse, die die Entstehung rotatorischer Nebenimpulse auf das System ausschließen.

Gemeinsame Merkmale des vorliegenden Standes der Technik sind somit: Die Notwendigkeit der Energieumwandlung je Wechselwirkungsfolge, die Nichtnotwendigkeit definierter physikalischer Körper bei der translatorischen Bewegung von "Masse", der Ausschluss einer gleichzeitigen rotatorischen und translatorischen Doppelbewegung desselben Körpers / derselben "Masse" und der Ausschluss eines rotatorischen Zwischenimpulses bei einem translatorisch stetig bewegten Körper / einer solchen "Masse".

Den in der Fachliteratur beschriebenen technologischen Hintergrund betreffend, wird weiterhin auf den dort zum Ausdruck gebrachten grundsätzlichen Zweifel verwiesen, dass in einem geschlossenen System eine einseitige Impulsminderung möglich sei allein durch Varianz der Masseverhältnisse wechselwirkender Körper, allein durch Umwandlung kinetischer Energie beim Einwirken beliebig gearteter Bremskräfte auf Körper, allein durch die Varianz elastischer und unelastischer Stoßeigenschaften von Körpern oder allein durch die Winkelbeschleunigung eines translatorisch ruhenden Rotors.

Unter Berücksichtigung dieser Kriterien erlauben die Gesetze der Physik aber dennoch die Entstehung antriebswirksamer Kraftwirkungen im autonomen formbeständigen, bezüglich Massenveränderung geschlossenen System. Maßgeblich für die physikalische Beschreibung des erfindungsgemäßen technischen Weges sind neben dem Energieerhaltungssatz die Trägheitsmerkmale von ruhenden und bewegten starren Körpern, der Impulserhaltungssatz und seine Anwendung auf Stoßvorgänge.

Zugleich wird erfindungsgemäß aber eine bisher nicht berücksichtigte spezielle Konsequenz des Impulserhaltungssatzes angewandt, aus der sich nicht nur logisch und mathematisch wie experimentell nachprüfbar ergibt, dass sich unter bestimmten Bedingungen der Massenschwerpunkt von abgeschlossenen Körpersystemen durch innere Kräfte gerichtet und stetig verändert, sondern dass jedes andere Ergebnis als dieses im Widerspruch zu den Gesetzen der Physik steht.

Eigentümlicherweise werden gerade jene Vorgänge und Merkmale bei Impulsübertragungen, aus denen sich diese Konsequenz ergibt, in der einschlägigen physikalischen Literatur überhaupt nicht oder nur für den Wechselwirkungsbeginn beschrieben.
Gerade für den für die Erfindung wesentlichen lmpulsübertragungsfall wird - vielleicht seiner Einfachheit wegen - gemeinhin auf die Darstellung des Wechselwirkungsabschlusses verzichtet. Das verwundert, zumal die Grundlagen, vor allem die Newtonschen Axiome und die Stoßgesetze, zu den am längsten gesicherten Aussagen der Physik gehören.

Es liegt der Erfindung die Aufgabe zugrunde, unter Berücksichtigung dieser Voraussetzungen ein elektromechanisches Antriebssystem bereitzustellen, bei dem zugeführte elektrische Energie in einer abgeschlossenen Kammer in kinetische Stoßenergie gewandelt wird, aus der sich eine resultierende Antriebskraft ergibt. Diese Aufgabe wird mit den Merkmalen der Erfindung gelöst.

Für den erfindungsgemäßen Anspruch muss es zur asymmetrischen Wirkung zweier gegensinniger zusammengehöriger innerer translatorischer Impulse auf das System kommen. Die Impulse müssen aus gemeinsamer Beschleunigung von wechselwirkenden Körpern hervorgehen. Kraftwirkungen zwischen Körpern seien vorzugsweise Stoßwirkungen

Vorausgesetzt wird
erstens, dass translatorische und rotatorische Impulse ineinander umwandelbar sind, zweitens, dass bei allen Stößen zwischen zwei translatorisch ruhenden Körpern wie auch bei jedem Stoß eines Körpers aus bestimmten translatorischen oder rotatorischen Einzelbewegungen heraus auf einen ruhenden Körper die Impulsvektorsumme konstant bleibt,
drittens, dass - wie von den Stoßgesetzen hinlänglich bekannt - bei einer kinetischen Wechselwirkung die Impulsbetragssumme nicht an die Impulsvektorsumme gebunden ist und
viertens, dass eine Bewegungsabfolge endet, wenn ein systembezogener Ruhezustand eingetreten ist.
Beim exzentrischen Einzelstoß aus rotatorischer Bewegung heraus erhalten stoßender und gestoßener Körper symmetrische translatorische Impulse

Gleichartige aber antagonistische Impulse gleichen sich in der systembezogenen Bilanz aus und heben sich bei der unelastischen kinetischen Wechselwirkung von Körpern real auf.
Leitmerkmal des elastischen Stoßes ist die Konstanz der kinetischen Energie. Leitmerkmale des unelastischen Stoßes sind die Abnahme der kinetischen Energie durch Energiewandlung und der Ausschluss eines Rückstoßes. Beides trifft auch auf translatorische Impulsübertragungen zu. Wechselwirkungsbeteiligten Körpern kann stets eine bestimmte massenbezogene kinetische Energiedichte zugeordnet werden.

Dem stoßenden wie dem gestoßenen Körper sind bei translatorischer Bewegung ein richtungsdefinierter Vektor zugeordnet, der die Bewegungsgröße "Impuls" beschreibt (Vektorimpuls). Der jeweilige Richtungssinn ist durch das Vorzeichen beschrieben. Alle Impulse sind durch einen vorzeichenunabhängigen Betrag gekennzeichnet. Stoßender und gestoßener Körper weisen zu jedem Zeitpunkt eine gemeinsame Vektorimpulsbilanz und eine gemeinsame Impulsbetragssumme = Summe aller vorzeichenunabhängigen Impulsbeträge auf.

Bei der translatorischen Bewegungsübertragung mittels vollständig elastischem Stoß kann sich, wie für den zentrischen Stoß beschrieben, der Vektorimpuls in Stoßrichtung vergrößern. Das geschieht immer dann, wenn der gestoßene Körper aufgrund seiner größeren Masse nach dem Stoß eine geringere kinetische Energiedichte aufweist, als sie der stoßende Körper kleinerer Masse vorher hatte. Dafür erfährt jener einen Rückstoß. Die Impulsvektorsumme bleibt konstant, die lmpulsbetragssumme steigt. Die kinetische Energiedichte beider Körper ist auch nach dem Stoß massenabhängig.

Bei der translatorischen Bewegungsübertragung mittels vollständig unelastischem Stoß ergeben sich hingegen zwischen den beteiligten Körpern nach dem Stoß keine kinetischen Energiedichte-Unterschiede. Eine einseitige Vektorimpulsverstärkung ist ebenso ausgeschlossen wie ein Rückstoß. Die Impulsbetragssumme bleibt konstant.

Während die Stoßgesetze die erwähnte Verstärkung der Vektorimpulse in Stoßrichtung erlauben, schließen sie eine Minderung der Vektorimpulse in Stoßrichtung aus. Eine Verringerung der Impulsbetragssumme ist bei zentrischen Stößen durch Aufhebung antagonistischer Impulse bei unelastischen Stößen möglich. Diese Aufhebung kann sich - Energiewandlung vorausgesetzt - auf zwei translatorische, zwei rotatorische Impulse oder einen translatorischen und einen rotatorischen Impuls beziehen.

Die erfindungsgemäße Grundbedingung der systembezogenen Vektorimpulsasymmetrie ist nur in dem einzigen Fall möglich, wenn sich beim Stoßgeschehen die Impulsvektorsumme erhöht, während die Impulsbetragssumme konstant bleibt. Das setzt die Entstehung und Aufhebung eines rotatorischen Zwischenimpulses auf einem stetigen translatorischen Impulsübertragungspfad voraus.

Dieser Sonderfall ist der exzentrische elastische Auftreffstoß eines gleichzeitig translatorisch und rotatorisch bewegten Körpers auf einen freien ruhenden Körper. Darauf bezieht sich das erfindungsgemäße Antriebsprinzip.
Für seine Erklärung nehmen wir vor: die formale Begründung der Gesetzmäßigkeit des Ergebnisses, die Beschreibung des Referenzstoßvorganges, die Anwendung dieses Vorganges auf das Standardmodell eines zu beschleunigenden Systems, die Kennzeichnung der Grundmerkmale des Antriebsprinzips und der wesentlichen Ausführungskonsequenzen.

Zur Begründung der GESETZMÄSSIGKEIT DES ERGEBNISSES gelte folgendes Modell:

Ein stoßender freier starrer elastische Körper mit exzentrischer Massekonzentration, der sich in ebener Bewegung befindet und zwar gleichzeitig geradlinig und um seinen Schwerpunkt drehend, trifft ideal exzentrisch auf einen ruhenden elastischen punktförmigen freien gestoßenen Körper gleicher Masse. Translatorische und rotatorische Bewegung des stoßenden Körpers weisen betragsgleiche Impulse auf. Beiden Bewegungen entspricht ein eigener kinetischer Energiebetrag.

Sechs Merkmale sind für diesen Stoßvorgang charakteristisch, nämlich
erstens, dass die kinetische Energie erhalten bleibt,
zweitens, dass sich die Impulsvektorsumme dadurch nicht mindert,
drittens, dass sich im Gegensatz zum zentrischen elastischen Stoß auch der stoßende Körper noch geradlinig weiterbewegt,
viertens, dass sich dabei allein aus der translatorischen Bewegung heraus stoßender und gestoßener Körper mit gleichem Impuls weiterbewegen,
fünftens, dass sich der Impuls der rotatorischen Bewegung translatorisch auflöst und auf beide Körper gegengerichtet verteilt und
sechstens, dass der punktförmige gestoßene Körper keinen Drehimpuls erhalten kann.

Vor dem Stoß ist der translatorische Impuls des stoßenden Körpers identisch mit der gemeinsamen Impulsvektorsumme und die Energie des stoßenden Körpers identisch mit der kinetischen Gesamtenergie. Jede Veränderung der Impulsvektorsumme im Zwei - Körper - System durch den translatorisch - rotatorischen Doppelstoß würde einer Beschleunigung des System - Massenschwerpunktes entsprechen. Konstant bliebe die lmpulsvektorsumme aber nur dann, wenn der rotatorische Impuls bei seiner Verteilung gleichmäßig auf beide Körper übertragen würde. Der stoßende Körper erhielte so die gleiche translatorische Impulsminderung, wie der gestoßene Körper eine Impulsverstärkung.

Wäre diese Verteilung vollständig und gleichmäßig, so ergäbe sich ein Impulsresultat wie beim zentrischen elastischen Stoß allein aus der translatorischen Bewegung heraus, aber eben auch nur mit einer diesem Stoß entsprechenden Energie. Das wäre notwendigerweise weniger Energie, als der stoßende Körper vorher aufwies.

Der stoßende Körper würde dabei translatorisch und rotatorisch ruhen und der gestoßene Körper hätte dessen vollen translatorischen Impuls, aber keinen rotatorischen Impuls erhalten. Da jedoch bei elastischen Stößen keine kinetische Energie verschwindet, ist dieses Ergebnis ebenso unmöglich, wie unter den Modellbedingungen eine Konstanz der Impulsvektorsumme.

Nur eine ungleiche Verteilung des gewandelten rotatorischen Impulses auf beide Körper beim Doppelstoß mit translatorischer Impulszunahme in Stoßrichtung erklärt den Verbleib von Rotationsenergie und steht im Einklang mit dem Energieerhaltungssatz. Eindrucksvoll wird das, wenn über die Modellbedingungen hinaus der rotatorische Impuls gerade eine solche Größe aufweist, dass der stoßende Körper translatorisch vollständig zur Ruhe kommt und fast alle Energieanteile in die translatorische Weiterbewegung des gestoßenen Körpers eingehen.

Ursache ist die Gleichzeitigkeit von zwei Bewegungsarten im stoßenden Körper und dessen Wechselwirkungsbeteiligung mit beiden Bewegungen gleichzeitig beim gemeinsamen Doppelstoß. Daraus ergibt sich unter kinetischer Energieerhaltung als Besonderheit eine lmpulsverteilung zwischen den Körpern, die Merkmale des in Stoßrichtung impulsverstärkenden elastischen Stoßes mit Merkmalen des rückstoßverhindernden unelastischen Stoßes vereint.

Der elastische stoßende Körper hat bei gleicher Masse durch seine Doppelbewegung eine höhere kinetische Energiedichte als der gestoßene Körper und hat zugleich die Fähigkeit, auch ohne Verformungsarbeit durch innere Wandlung von rotatorischer in translatorische Bewegungsenergie eine rückstoßfreie kinetische Wechselwirkung einzugehen. Beides zusammen macht die geschilderten Stoßbedingungen einmalig.

Bei jedem exzentrischen Stoß des stoßenden Körpers tritt im Sinne von translatorischer Bremsarbeit das Bestreben einer Rückrotation dieses Körpers auf, was ihm in gleichem Umfang Rotationsenergie verleihen würde, wie die kinetische Energie der translatorischen Bewegung von ihm und seinem Stoßpartner abnähme. Befindet sich der stoßende Körper jedoch bereits in der angenommenen Vorwärtsrotation, so kann sich seine Rotationsenergie gar nicht erhöhen, denn gegensinnige Kräfte und Impulse an ein und demselben Körper können ebenso wenig zu einer Rotationsverstärkung führen, wie eine stoßender Körper zu einer Verstärkung seiner Translationsbewegung gelangen kann.

Damit kann aber diese für einen exzentrischen Stoß charakteristische Energiemenge überhaupt nur sofort gewandelt in die rein translatorische Vorwärtsbewegung des gestoßenen Körpers eingehen. Sie steht für eine weitere Verteilung nicht mehr zur Verfügung. Sie allein bewirkt, dass sich die Gegebenheiten der Impulsvektorverteilung verändern.

Die Beschreibung des REFERENZSTOSSVORGANGES wird auf zwei starre elastische massengleiche Körper bezogen, nämlich einen Körper B, bestehend aus einer Punktmasse und einen Rotorkörper R, bestehend aus zwei einander gleichen halb so großen Punktmassen Rₓ und R_{y}, die auf Distanz durch ein masseloses Stabelement zu einer symmetrischen Hantel mit der Drehachse im Schwerpunkt verbunden sind. Gemeinsamer Stoßort beider Körper ist die Berührung der Punkte B und R_{X}, also zentrisch am Körper B und maximal exzentrisch am Körper R.

Der Rotorkörper = Hantelrotor befindet sich in doppelter ebener Bewegung. Seine beiden Grundbewegungen Translation und Rotation erhielt er durch eine vorausgegangene Beschleunigung. Dementsprechend weist er einen translatorischen Grundimpuls p₀ und einen rotatorischen Grundimpuls L₀ auf. Rotatorische und translatorische Bewegung weisen gleichgroße kinetische Energie auf, der Impuls der einen Bewegung ist bei vollständiger Umwandlung bezogen auf konstante Masse dem Impuls der anderen Bewegung betragsgleich. Der Richtungssinn des Impulses p₀ ist die Stoßrichtung.

Beim Referenzstoßvorgang trifft der Hantelrotor R mit senkrechtem glattem exzentrischem Stoß auf den ruhenden Körper B und zwar für diesen Körper zentrisch. Beide Grundimpulse werden übertragen. In einem Stoßereignis vereint finden am gleichen Ort gleichzeitig zwei Teilstöße statt, die getrennt beschreibbar und gemeinsam zu bilanzieren sind. Der Teilstoß 1 ist der exzentrische Stoß der rotatorisch ruhenden Hantel aus translatorischer Bewegung heraus; der Teilstoß 2 ist der exzentrische Stoß der translatorisch ruhenden Hantel aus rotatorischer Bewegung heraus.

Beim Teilstoß 1 bleibt der translatorische Grundimpuls pₒ auf beide Körper verteilt erhalten: p₀ = p_{Rt} + p_{Bt}. Es entsteht aber der zusätzliche sekundäre rotatorische Impuls Lp der Rückwärtsdrehung im Hantelrotor, zu dem es keinen Gegenimpuls im Körper B gibt. Die Impulsbetragssumme wird um den Betrag Lp größer. Beim Teilstoß 2 ist der rotatorische Grundimpuls L₀ der körperinterne Antagonist von Lp.

Es tritt somit beim gemeinsamen Doppelstoß - Ereignis beider Teilstöße im stoßenden Körper R gleichzeitig ein vorwärtsgerichteter und ein rückwärtsgerichteter rotatorischer Impuls auf. Ein derartiges Ereignis ist überhaupt nur für den Moment der Wechselwirkung möglich, denn antagonistische Impulse können nicht gleichzeitig im selben Körper Bestand haben. Sie können sich demzufolge auch nicht aufheben. Aus dem Betrag des zusätzlichen sekundären rotatorischen Impulses Lp entsteht ein betragsgleicher zusätzlicher sekundärer translatorischer Impuls Δp in Stoßrichtung im Körper B, zu dem es jetzt im Körper R keinen Gegenimpuls gibt. Die Beträge von Lp und Δp sind gleich, weil L₀ größer als Lp ist. Zusätzlich wird der aus der Differenz der beiden rotatorischen Impulse verbleibende Rest L_{0(Rest)}= L₀ - Lₚ translatorisch gewandelt gegensinnig auf beide Körper verteilt: +p_{Br} und -p_{Rr}. Für den Körper R ergibt sich damit ein Restimpuls p_{R}.
Die Entstehung des zusätzlichen Impulses Δp entsprechend Lp ist ursächlich für die Vergrößerung der Impulsvektorsumme.

Während sich die Impulsvektorsumme erhöht, verringert sich die Impulsbetragssumme in der Bilanz des Referenzstoßvorganges.
Somit wird nicht nur der Betrag des rotatorischen Grundimpulses L₀ nicht gleichmäßig, vielmehr asymmetrisch auf die am Referenzstoßvorgang beteiligten Körper übertragen, sondern es verändert sich auch die Impulsvektorsumme losgelöst von der Impulsbetragssumme.

Die Impulsvektorsumme nach dem Referenzstoßvorgang ist eine andere als vorher. Das ist die Voraussetzung für eine systembezogene Vektorimpulsasymmetrie.

Wie groß unter anderen Bedingungen als denen des Referenzstoßvorganges die translatorische Impulsverstärkung in Stoßrichtung ist, wie die relative Größe des Impulses Lp ist, hängt vom Massenträgheitsmoment des Rotorkörpers, vom Massenverhältnis zwischen beiden Körpern und vom abgestimmten Verhältnis beider Grundimpulse ab.

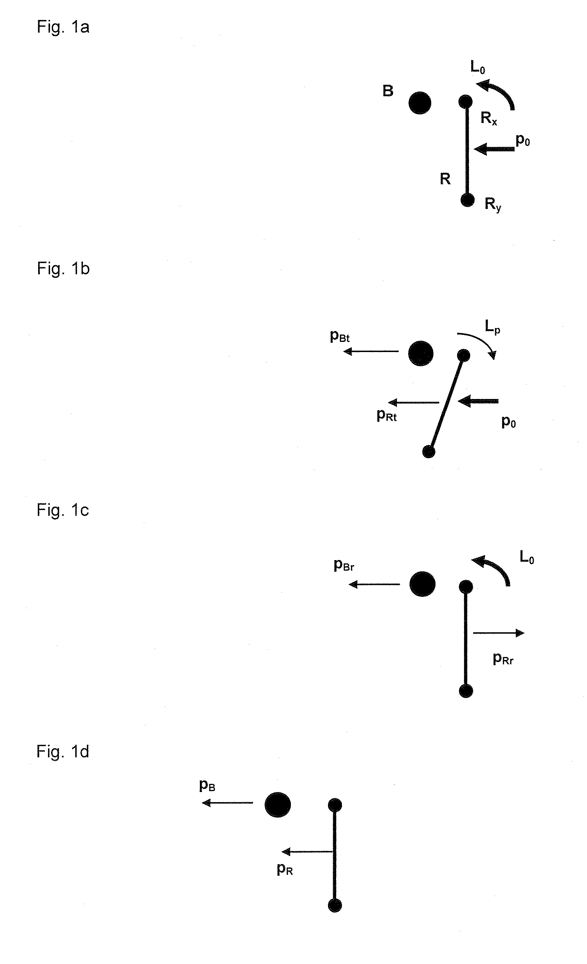

Der Referenzstoßvorgang wird anhand der beigefügten Figuren 1a bis 1d näher erläutert, wobei die Körperkennzeichnung der Übersichtlichkeit wegen auf die Figur 1a beschränkt ist und wobei
- Fig. 1a: die Ausgangssituation,
- Fig. 1 b: den translatorischen Teilstoß,
- Fig. 1c: den rotatorischen Teilstoß und
- Fig. 1d: das Ergebnis des Zusammenwirkens beider Teilstöße darstellt.

Beim STANDARDMODELL besteht das System aus vier Körpern: einem hohlen unelastischen Hüllkörper COV geringer, aber nicht vernachlässigbarer, Masse, der das System räumlich abschließt und drei in einer Ebene frei beweglichen elastischen Körpern in seinem Inneren. Der prismenförmige Hüllkörper weist spiegelbildliche senkrechte Seitenflächen auf. Die elastischen Körper sind die zwei Körper R und B aus der Referenzstoßbetrachtung und ein weiterer Körper Bₐ, der dem Körper B, im weiteren als Körper B_{b} bezeichnet, gleicht. Diese drei Körper befinden sich einander benachbart nahe dem Systemzentrum, wobei R zwischen Bₐ und B_{b} positioniert ist.

Das System habe einen relativen Massengrößenwert von näherungsweise = 3, welcher sich aus den relativen Teilmassen des Hüllkörpers mCOV > 0 und der elastischen Körper mBₐ = mB_{b} = mR =1 zusammensetzt. Die Binnenbewegung der elastischen Körper bezieht sich auf den Hüllkörper, die Lage und Bewegung des allen vier Körpern gemeinsamen Massenschwerpunktes dagegen auf ein beliebiges äußeres Inertialsystem.

Für das System werden drei Bewegungszustände unterschieden: der Ausgangszustand innerer und äußerer Ruhe, der Zwischenzustand innerer Bewegung und äußerer Ruhe und der Endzustand innerer Ruhe und äußerer Bewegung. Zwischen Ausgangs- und Endzustand finden nacheinander Stöße zwischen allen vier Körpern statt.

Im Ausgangszustand liegen, wie später im Endzustand ebenfalls, die Punktmassen Bₐ, B_{b} und Rₓ parallel zur zentralen Längsachse des Systems = Systemachse. Die Radienachse des ruhenden Hantelrotors ist dazu senkrecht ausgerichtet. Die Systemachse trifft auf entgegengesetzte Hüllkörperflächen an den Zentralpunkten C1 und C2. Die Körper Bₐ und R sind kraftschlüssig eng, R und B_{b} dagegen auf Distanz benachbart. Den Ausgangszustand beendet ein Kraftstoß Ft = elastischer Stoß 1 zwischen den ruhenden Körpern Bₐ und R an den Punkten Bₐ und Rₓ₁, der beide Körper beschleunigt und mit gleich großem translatorischem Impuls voneinander wegbewegt und dabei der Hantelrotor R zusätzlich in Drehung versetzt. Der Punkt Rₓ₁ befindet sich etwas weniger exzentrisch auf dem Hantelrotor als die Punktmasse Rₓ, um für den Hantelrotor beim Kraftstoß Ft die beim Referenzstoßvorgang vorausgesetzte Energie- und Impulsverteilung auf beide Teilbewegungen zu bewirken.
Die translatorische Bewegungsrichtung des Hantelrotors ist die vorgesehene Antriebsrichtung.

Nach längenmäßig abgestimmter gerader Bahnbewegung tritt der Hantelrotor R in den Referenzstoßvorgang = elastischer Stoß 2 = Doppelstoß ein. Unter den gewählten Bedingungen danach rotatorisch weitgehend zur Ruhe gekommen, bewegt sich der Hantelrotor aber translatorisch in gleichem Richtungssinn wie der durch ihn beschleunigte Körper B_{b} weiter, wenn auch mit anderem Impuls und mit anderer Geschwindigkeit. Die drei Körper Bₐ, B_{b} und R haben die ungleich großen translatorischen Impulse pₐ, p_{b} und P_{R} erhalten. Am größten ist der Impuls p_{b}. Die Impulse p_{R} und p_{b} wirken in Antriebsrichtung, der Impuls pₐ ihnen entgegen.

Mit dem Auftreffen des Körpers Bₐ im Punkt C1 und des Körpers B_{b} im Punkt C2 auf den Hüllkörper = unelastische Stöße 3 und 4 und dem dortigen Verharren in systembezogener Ruhe werden die antagonistischen Impulse pₐ und p_{b} auf den Hüllkörper übertragen. Ihre Summe ergibt den resultierenden translatorischen Nettoimpuls p_{comp}. Er beschreibt die aus gemeinsamer Beschleunigung hervorgehende Bewegungsänderung der Körper Bₐ, B_{b} und COV in Antriebsrichtung.

Aufgrund seiner geringeren Geschwindigkeit als derjenigen des ihm vorauseilenden Körpers B_{b} und seiner höheren Geschwindigkeit als derjenigen des Körperverbundes COV/Bₐ/B_{b} trifft auch der Körper R zeitversetzt am Ort C2 auf den unelastischen Hüllkörper COV auf, wo er verharrt. Die vier Körper des Systems befinden sich im stabilen formschlüssigen Verbund.

Damit ist der Endzustand des Systems eingetreten: in gegenseitiger Ruhestellung bewegen sich alle vier Körper über ihren gemeinsamen Masseschwerpunkt vereint mit gleicher Geschwindigkeit in gleicher Richtung gegen das Inertialsystem weiter. Die Bewegungsänderung des Systems ist beschrieben durch Δp_{system} = p_{comp}+ p_{R}

Die Gesamtimpulsvektorsumme des Systems ist gestiegen.

Der Kraftstoß Ft = elastischer Stoß 1 fand am zentrumsnahen Ort S1 statt, der elastische Stoß am Ort S2. Der Hantelrotor R bewegt sich im Streckenabschnitt S1/C2, der Körper Bₐ im Streckenabschnitt S1/C1 und der Körper B_{b} im Streckenabschnitt S2/C2. Mit dem Eintreten des Endzustandes ist eine Bewegungsabfolge beendet und deren Impulsbilanzierung abgeschlossen.

Andere Kräfte als der Kraftstoß Ft führen die drei elastischen Körper unter Vermeidung jedweder Winkelbeschleunigung gleichförmig geradlinig zu ihrem Bewegungsursprung zurück und versetzen das System vom Endzustand in einen neuen inneren Anfangszustand.

Im Ergebnis des Übergangs vom inneren Anfangs- zum inneren Endzustand erfährt das System eine äußere Beschleunigung. Während des Überganges vom inneren Endzustand zum inneren Anfangszustand verharrt es in gleichförmiger äußerer Bewegung.

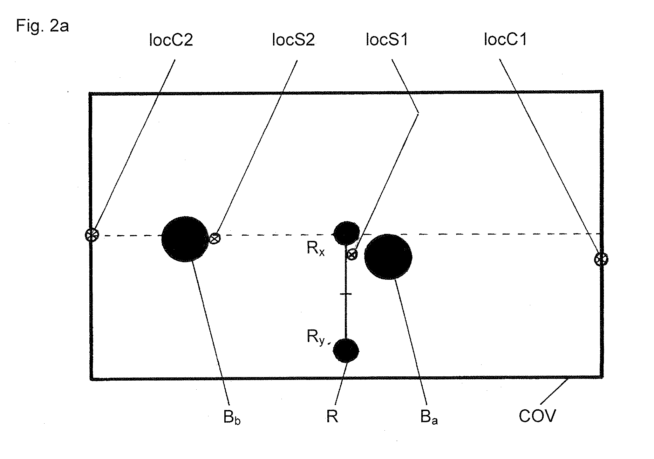

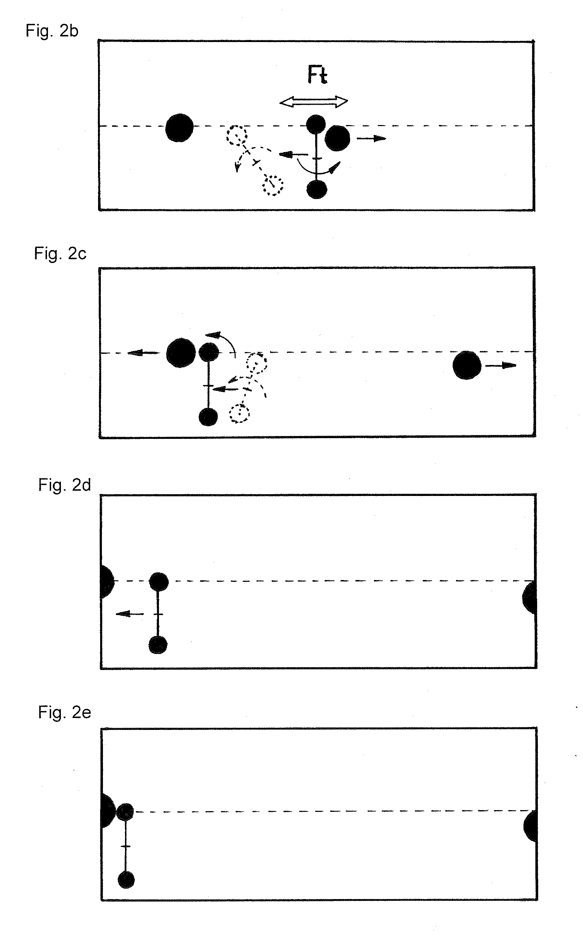

Das Standardmodell des Systems wird anhand der beigefügten verknüpften Figuren 2a bis 2e näher erläutert, wobei der Übersichtlichkeit wegen die Kennzeichnung der Körper und Orte auf die Figur 2a beschränkt wurde und wobei
die Fig. 2a und 2b den Ausgangszustand des Systems vor dem und beim Kraftstoß die Fig. 2c und 2d den Zwischenzustand des Systems vor und nach dem Referenzstoßvorgang und
die Fig. 2e den Endzustand des Systems
darstellen.

Vereinfachend wird für die Körper Bₐ und B_{b} an den Orten C1 und C2 ein identischer Stoßzeitpunkt angenommen. Am Ort C2 soll keine elastische Wechselwirkung zwischen den Körpern R und B_{b} stattfinden. Im Gegensatz zum Ausführungsmodell werden beim Standardmodell Folgen unvollkommener axialer Massensymmetrie und der leicht dezentralen Lage des Stoßortes C1 nicht weiter berücksichtigt.

Das dem Standardmodell zugrundeliegende Prinzip gilt auch unter realen ausführungstechnischen Anpassungen und Einschränkungen. Diese können die Lage des Ortes S1 für den elastischen Stoß 1 ebenso betreffen, wie die Veränderung der translatorischen Geschwindigkeiten nach dem elastischen Stoß 2, wie das Verhältnis der Impulse L₀ und p₀ am Hantelrotor, wie den Abstand der Stoßorte S1 und S2 und wie das Ersetzen senkrechter Stöße am Hantelrotor durch Stöße mit lediglich hinreichend steilem Auftreffwinkel. Dem Sinn der technischen Ausführung entspricht es, dass dann vor allem die Masse des Hüllkörpers groß wird.

Mit jedem erneuten Verlassen eines erneuten Ausgangszustandes beginnt eine neue Impulsbilanzierungsebene. Im einmaligen wie im zyklisch wiederholten Vorgang wird durch das Wirken innerer Beschleunigungskräfte ein nach außen wirkender Antriebsimpuls "aus dem System auf das System" übertragen. Auf diese Weise ist die geradlinige Beschleunigung eines systemischen Verbundes von Körpern notwendigerweise unter Energiezufuhr, aber ohne Einwirkung eines systemfremden äußeren Kraftstoßes möglich. Durch eine starre und abgeschlossene Hülle tritt der Körperverbund bei gleichzeitiger Massenkonstanz gegenüber seiner Umgebung als ein Körper in Erscheinung.

Physikalisch kennzeichnend für das Prinzip ist die kinetische Wechselwirkung von Körpern in einem geschlossenen System, bei der in einem Körper zugleich zwei Trägheitsarten wirksam werden, bei der sich folglich zwischen den Körpern das Verhältnis ihrer trägen Massen vom Verhältnis ihrer wirkenden Trägheitskräfte unterscheidet, bei der es zu einer Stoßabfolge mit zweimaligem Wechsel unterschiedlicher Impulsarten und zweimaliger Wechselwirkungsbezogenheit von Massenträgheit und Massenträgheitsmoment beim Auftreten eines zusätzlichen inneren rotatorischen Zwischenimpulses kommt, bei der die Gesamtheit der Impulsübertragungen mit einer Vergrößerung der Impulsvektorsumme einhergeht und bei der sich daraus ein resultierender äußerer translatorischer Systemimpuls ergibt.

Das dem starren rotierenden Körper und seinem rotatorischen Zwischenimpuls zuzuordnende Massenträgheitsmoment wirkt gemäß den Stoßgesetzen bei der Entstehung der Drehbewegung translatorisch stoßkraftmindernd und bei deren Beendigung in gleicher Richtung stoßkraftverstärkend, wodurch der Unterschied der translatorischen Impulse gleichen Ursprungs begründet wird. Auf die experimentelle Evidenz dieses Effekts wird nochmals verwiesen.

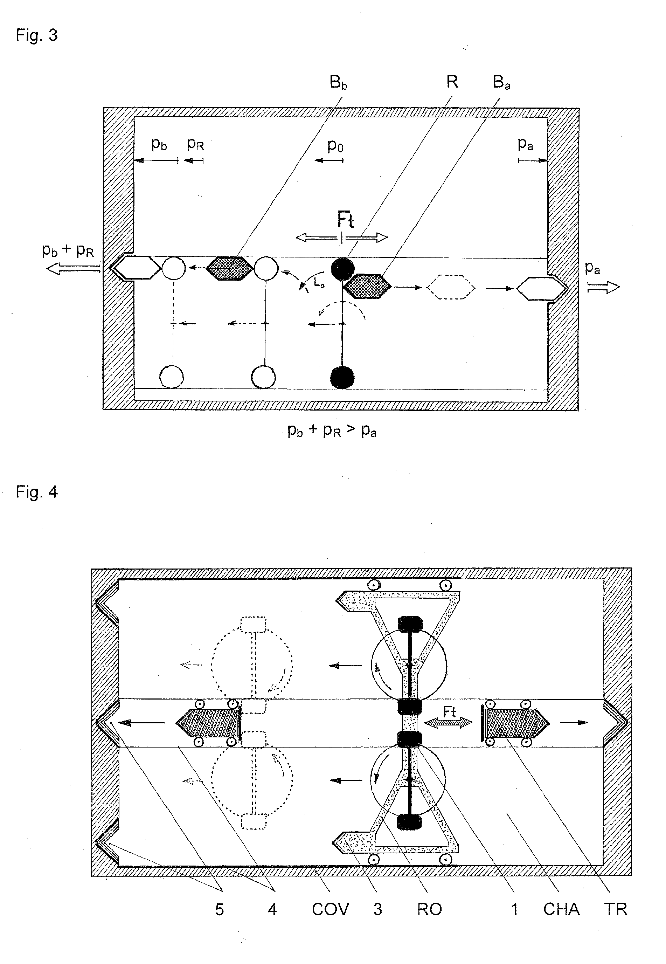

Das aus Referenzstoßvorgang und Standardmodell abgeleitete erfindungsgemäße Antriebsprinzip mit dem Vermögen, unter Energiezufuhr einem autonomen Vehikel ohne Massenverlust in zyklischer taktförmiger Arbeitsweise beständig Antriebsimpulse zu verleihen, ist zusammenfassend in Figur 3 dargestellt. Ausschließlich der Übersichtlichkeit wegen wird in Figur 3 wie schon in den Figuren 2a bis 2e auf die Beachtung der Massensymmetrie und der Stoßzentrik verzichtet.

Die GRUNDMERKMALE des erfindungsgemäßen Antriebsprinzips sind körper-, bewegungs-, raum-, prozess-, energie- und impulsbezogen folgende:
1. KÖRPERBEZOGEN ermöglichen nur starre Festkörper sowohl definierte Stöße an definierten Flächen, als auch Drehbewegungen unter Formwahrung, als auch das Wirksamwerden eines hohen Massenträgheitsmoments.
2. BEWEGUNGSBEZOGEN erfolgen in zyklischer Wiederholung tangentiale Auftreffstöße eines vorher beschleunigten freien Rotorkörpers gleichzeitig aus translatorischer und rotatorischer Bewegung heraus zentrisch auf einen ruhenden Körper unter Rotationsbeendigung und mit der Folge getrennter gleichsinniger translatorischer Weiterbewegung beider Körper bis zum Auftreffen auf eine Kammerwand.
3. RAUMBEZOGEN nehmen die gestoßenen Körper im Verlauf ihrer Antriebsbewegungen in zyklischer Wiederholung auf gemeinsamer zentraler gerader Bahn wechselnde Positionen ein und treten in Kontakt mit entgegengesetzten Kammerwänden.
4. PROZESSBEZOGEN erlauben translatorische Stoßabfolgen weniger Körper im geschlossenen Raum nur den diskontinuierlichen taktgemäßen Intervallbetrieb, bei dem sich der stetige Antriebsvorgang aus der Wiederholung identischer Antriebsereignisse ergibt.
5. ENERGIEBEZOGEN ist die Wandlung und Ableitung zugeführter kinetischer Energie je Stoßabfolge physikalisch nicht erforderlich, wohl aber technisch zur Ausführung eines zyklischen taktförmigen Antriebsvorganges geboten.
6. IMPULSBEZOGEN ergibt sich im System in jeder einem Antriebsereignis zugehörenden Stoßabfolge eine Vektorimpulsasymmetrie und daraus ein resultierender äußerer Antriebsimpuls.

### Erfindungsgemäß ergeben sich fünf wesentliche AUSFÜHRUNGSKONSEQUENZEN:

Erstens werden der Massenkonstanz und räumlichen Geschlossenheit wegen Antriebsbewegungen durch elektromagnetische Kräfte und nicht durch thermische Volumenkräfte aus Verbrennungsprozessen veranlasst und beschränken sich strikt auf die Antriebskammer.
Zweitens gehen für die zyklische Arbeitsweise alle Antriebsbewegungen vorübergehend in einen systembezogenen relativen Ruhezustand über und wechseln sich mit rückführenden Bereitstellungsbewegungen ab. Dafür tragen alle Auftreffstöße auf die Kammerwand unelastischen Charakter.
Drittens vereinen für einen hohen Wirkungsgrad die Rotoren betragsmäßig aufeinander abgestimmte translatorische und rotatorische Impulse auf sich und geben ihren Drall translatorisch gewandelt weiter, ohne dabei selbst in eine systembezogene Rückwärtsbewegung zu geraten. Dafür weisen sie ein hohes Massenträgheitsmoment auf und stehen im geeigneten Massenverhältnis zu ihren Stoßpartnern.
Viertens werden zur Vermeidung rotatorischer Systemimpulse an den betreffenden Antriebskammerwänden nur senkrechte zentrische Kräfte wirksam. Zudem sind alle bewegten Massen symmetrisch um die zentrale Antriebsachse verteilt und Rotoren spiegelbildlich doppelt ausgeführt mit einem gemeinsamen Massenschwerpunkt auf der zentralen Antriebsachse.
Fünftens wird für einen schwingungsarmen Betrieb unter den Bedingungen ständiger stoßförmiger Beschleunigungen die Antriebsleistung auf eine Anzahl gleichartiger Antriebselemente mit zeitlich versetztem Arbeitstakt verteilt.

Es ist Aufgabe der Erfindung, eine diesen Grundmerkmalen und Ausführungskonsequenzen folgende Antriebslösung bereitzustellen.
Dem folgt die allgemeine Ausführungsbeschreibung für jede erfindungsgemäße Antriebslösung und die ergänzende spezielle Ausführungsbeschreibung für eine technisch konkretisierte Antriebslösung.

Die ALLGEMEINE AUSFÜHRUNGSBESCHREIBUNG bezieht sich auf ein Antriebselement und ein Antriebsereignis. Das Antriebselement besteht aus der Antriebskammer, den in ihr befindlichen aktiven Körpern im Sinne des Standardmodells, der Antriebskammerwand und Funktionseinheiten, die dieser Kammerwand zugeordnet sind.

In der Antriebskammer CHA kann der Ausgangsort der Antriebsbewegungen zentral oder peripher liegen. Bei zentraler Lage bewegen sich alle eingeschlossenen aktiven Körper RO/TR bilateral entgegengesetzt mit verschiedener Geschwindigkeit auf zwei gegenüberliegende Kammerwände COV zu. Es gibt zwei Übertragungskörper. Diese Ausführung bilateraler Stöße lehnt sich eng an das Standardmodell an. Liegt der Ausgangsort der Antriebsbewegungen dagegen peripher nur an der rückwärtigen Kammerwand, dann bewegen sich alle eingeschlossenen aktiven Körper in gleicher Richtung mit unterschiedlicher Geschwindigkeit auf die gegenüberliegende frontale Kammerwand zu . Diese Ausführung unilateraler Stöße modifiziert das Standardmodell. Das Massenverhältnis der wechselwirkenden Körper ist verändert, es gibt nur einen Übertragungskörper.

Rotation und Translation eines Rotors können, wie im Standardmodell, aus gemeinsamer oder, alternativ, aus getrennter Kraftwirkung herrühren. Es ist also eine Ausführung mit einmaliger oder kombinierter Beschleunigung möglich. Ein erfindungsgemäßer Rotor kann weiterhin im Vollkreis oder auch nur im engen Kreissektor rotieren. Die Rotoren sind ideale Rotoren mit Ortsgleichheit von Drehachse und Massenschwerpunkt sowie mit peripherer Massenkonzentration. Sie können entweder als Kreisring oder als Hantel ausgeführt sein. Eine Hantel kann massengleiche Endkörper und identische Radien aufweisen oder massenungleiche Endkörper und ungleiche Radien.

Die Antriebsbeschleunigung in der Antriebskammer soll entweder komprimiert in einem einmaligen Kraftstoß - Ereignis erfolgen oder über einen zeitlich gedehnten Kraftwirkungsvorgang. Der Kraftstoß wird vorzugsweise an einem Beschleunigungsort durch einen Elektromotor erzeugt und auf einen Hantelrotor ausgeübt. Die zeitlich gedehnte Kraftwirkung wird vorzugsweise entlang einer Beschleunigungsstrecke durch elektromagnetische Felder auf einen Ringrotor ausgeübt. Die erforderliche elektrische Energie für alle Vorgänge in der Antriebskammer ist vorhanden und wird dem Antriebselement zugeführt.

Der zyklische Bewegungstakt aktiver Körper in der Antriebskammer unterscheidet zwei alternierend stattfindende Bewegungsvorgänge: ANTRIEBSBEWEGUNGEN als beschleunigte energiereiche Stoßbewegungen und nachfolgende gegengerichtete weggleiche BEREITSTELLUNGSBEWEGUNGEN als gleichförmige energieschwache Rückführungs- und Positionierbewegungen. Der Ausgangs - Ruhezustand der einen Bewegungen ist zugleich der Abschluss - Ruhezustand der anderen Bewegungen. Stöße innerhalb der Antriebskammer sind stets elastische Stöße, Auftreffstöße auf deren Wand stets unelastische Stöße.

Aufgabe der Bereitstellungsbewegungen ist es, die am Antriebsgeschehen beteiligten Körper an den Ort, in die Position und in den Zustand zu versetzen, welche gemeinsam den Ausgangs - Ruhezustand der Antriebsbewegungen kennzeichnen. Alle aktiven Körper werden in ihren Ruhepositionen durch schwache lokale magnetische Kräfte fixiert. Alle Bewegungen sind ebene Bewegungen.
Sowohl die Orte der elastischen Stöße an den Rotoren als auch das Massenverhältnis der beteiligten Körper bestimmen die nach dem rotationsbeendenden elastischen Stoß verbleibende vorwärtsgerichtete translatorische Restbewegung der Rotoren und den "Wirkungsgrad" der Antriebsimpulserzeugung. Für die Ausführungsbeispiele wird, das Standardmodell weiter modifizierend, eine solcher Fall gewählt, dass alle Stoßkräfte maximal exzentrisch auf die Rotoren wirken und dass dafür die Masse jedes Übertragungskörpers kleiner ist als die beider Rotoren zusammen, dies jedoch bei radiengleichen hantelförmigen Rotoren nur in geringem Maße, bei radienungleichen hantelförmigen Rotoren dagegen in mehr als nur geringem Maße, vorzugsweise um die Hälfte. Weiterhin sind am Antriebsgeschehen aus Symmetriegründen mehrere Rotoren in gerader Anzahl beteiligt.

Die SPEZIELLE AUSFÜHRUNGSBESCHREIBUNG bezieht sich nachfolgend auf die Herbeiführung eines Antriebsereignisses, gekennzeichnet durch unilaterale Stöße, durch einmalige Beschleunigung und durch Beschleunigung mittels eines Kraftstoßes.
Die ANTRIEBSKAMMERWAND COV ist starr, geschlossen und wärmeleitend. Mit dem Vehikel fest verbunden, erfolgt über sie die Weitergabe des Antriebsimpulses. Unerwünschte, aber unvermeidbare Prozesswärme aus dem Kammerinneren wird über sie nach außen übertragen und durch Konvektion oder Wärmestrahlung abgegeben. An ihrer Innenseite sind die der Antriebskammer zugehörigen Schienen 4 verankert. Die zur Antriebsrichtung parallelen Kammerwandbereiche sind die Seitenwände, die beiden dazu senkrechten stirnseitigen Bereiche sind in Antriebsrichtung die frontale Kammerwand und in entgegengesetzter Richtung die rückwärtige Kammerwand.

An der rückwärtigen Kammerwand befindet sich der elektrische Antriebsmotor = Hauptmotor 2, an der frontalen Kammerwand mehrere symmetrisch angeordnete Stoßfangvorrichtungen 5. Der Hauptmotor verrichtet Spannungsarbeit an einer Antriebsfeder, aus deren Entspannung der Kraftstoß auf die aktiven Körper in der Antriebskammer hervorgeht. Ausgeübt wird der Kraftstoß durch den von der rückwärtigen Kammerwand ins Kammerinnere vorschnellenden Stößel 6.

Die Stoßfangvorrichtungen an der frontalen Kammerwand wirken als Bremszone, die einem auftreffenden aktiven Körper eine ausreichende Eindringtiefe ermöglichen, einen vollkommen unelastischen Stoß hervorbringen und auftreffende Körper an die Kammerwand binden. Ohne Einfluss auf die Impulsbilanz wird dabei kinetische Energie in nichtkinetische Energie umgewandelt. Das kann beispielsweise durch Reibung zwischen starren Körpern, reversible Verformung eines kissenförmigen plastischen Körpers oder Strömungserzeugung mittels Kolbendruck in einer Flüssigkeit erfolgen. Für jeden auf die frontale Kammerwand auftreffenden Körper ist eine eigene Stoßfangvorrichtung ausgeführt.

In der ANTRIEBSKAMMER CHA befinden sich zwei aktive Körper, nämlich der Rotor - Antriebskörper RO und der Übertragungskörper TR, weiterhin Schienen 4 zur Bewegungsführung beider Körper und außerdem vier Elektromotoren = Nebenmotoren zur Ausführung der Bereitstellungsbewegungen, davon einer in den Übertragungskörper integriert und drei in den Rotor - Antriebskörper integriert. Die Antriebskammer weist eine wärmeleitende Gasatmosphäre auf. Die Stromzufuhr für die vier Nebenmotoren erfolgt über die Schienen.
Die Zentralachse der Antriebskammer entspricht der gemeinsamen translatorischen Bewegungsbahn von Rotor - Antriebskörper und Übertragungskörper. Die Massenschwerpunkte beider Körper bewegen sich nur auf der Zentralachse. Da alle Kräfte auf stirnseitige Kammerwände senkrecht zentrisch wirken und auf die Seitenwände keine Kräfte wirken, sind seitliche Beschleunigungskräfte mit Rotationskonsequenz für das System ausgeschlossen. Der Kraftstoß an der rückwärtigen Kammerwand trifft nur den Rotor - Antriebskörper. Auftreffstöße auf die frontale Kammerwand erfolgen vorzugsweise durch beide Körper getrennt. Zwischengelagert ist der Stoß des Rotor - Antriebskörpers auf den Übertragungskörper.

Rotor - Antriebskörper und Übertragungskörper bewegen sich hintereinander platziert über eigene Radachsen als Wagen nach dem Schiene - Rad - Prinzip frei in einem gemeinsamen geraden Korridor, dabei zweidimensional geführt durch mehrere gegenüberliegende Schienen. Ihre Antriebsbewegungen gehen weitgehend reibungsfrei vonstatten.

Zu Beginn der Antriebsbewegungen befindet sich der Rotor - Antriebskörper in Kontakt mit dem Stößel, der Übertragungskörper aber auf geringer Distanz zum Rotor - Antriebskörper. Diese Distanz hat mindestens den Betrag der Stößelauslenkung, also der Beschleunigungsstrecke der Rotoren, und höchstens den Betrag, ab dem der Auftreffstoßwinkel der Rotoren stärker von den Gegebenheiten des senkrechten Stoßes abweichen würde als ihr Abstoßwinkel.

Während alle Massenschwerpunkte der bewegten Körper auf gemeinsamer Ebene liegen, sind die jeweils räumlich angeordneten und an den Antriebskammerwänden befindlichen Führungsschienen für Rotor - Antriebskörper und Übertragungskörper ebenenversetzt vorzugsweise an unterschiedlichen gegenüberliegenden Wänden ausgeführt. Trotz des gemeinsamen Bewegungskorridors wird dadurch die Kollision eines Körpers mit dem Fahrwerk des anderen Körpers und werden andere als die erfindungsgemäßen Impulsübertragungen ausgeschlossen.
Rotor - Antriebskörper und Übertragungskörper sind keine monolithischen Körper, sondern entsprechen technisch üblichen rollenden Fahrzeugen mit der Fähigkeit zum Eigenantrieb. In Antriebsrichtung rollen sie passiv geschossähnlich ungebremst bis zum Stoß, in Gegenrichtung wirkt ihr eigener Elektromotor auf ihre Radachse und bewirkt ein herbeigeführter antriebswirksamer Kraftschluss zu den Schienen die erfindungsgemäße Bereitstellungsbewegung. Mit Abschluss der Bereitstellungsbewegung enden Eigenantrieb und dieser Schienen - Kraftschluss wieder.

Der ROTOR - ANTRIEBSKÖRPER RO weist neben seinem Fahrwerk noch zwei identische hantelförmige Rotoren 1 auf, deren hinreichend großer Radius eine Auslenkung über die Fahrwerksgrenzen hinaus selbst bei geringem Drehwinkel ermöglicht. Beide Rotoren sind spiegelbildlich übereinander oder vorzugsweise nebeneinander angeordnet und befolgen dabei die generelle Massenverteilungssymmetrie um die Antriebsachse. Die Masse der Rotoren dominiert diejenige des Rotor - Antriebskörpers. Die Endkörper der hantelförmigen Rotoren sind prismenförmige Scheiben, deren plane Flächen parallel zur Bewegungsebene liegen.
Erfindungsgemäß ist ein hohes Massenträgheitsmoment der Rotoren des Rotor - Antriebskörpers. Im speziellen Anwendungsbeispiel kommen hantelförmige Rotoren mit einem Radien- und Endmassenverhältnis von 2 : 1 und der kleineren Endmasse am Stoßort zur Anwendung. Die Rotoren drehen sich aufgrund spiegelbildlicher Position gegensinnig, weisen also am Stoßort richtungsgleiche Kraftvektoren auf. Aufgrund ihrer Identität drehen sie sich zudem synchron. Die periphere Stoßflächengeometrie ist so ausgelegt, dass für beide Rotoren am jeweils gleichen Ort ein gemeinsamer exzentrischer Stoß stattfindet.

Beide die Antriebsbewegung betreffenden Stöße, an denen der Rotor - Antriebskörper mit einer Doppelbewegung beteiligt ist, erfolgen nur über seine Rotoren. Zwischen den beiden Stößen drehen sich die Rotoren und bewegt sich der Rotor - Antriebskörper translatorisch schnell auf der kurzen Strecke bis zum Übertragungskörper. Die Kürze dieser Rollstrecke hält auch die gleichzeitige Winkelbewegung der Rotoren gering, vorzugsweise auf unter 30° begrenzt. Dadurch weisen beide Stöße an den Rotoren keine große Abweichung von der Eigenschaft des tangentialen, den Radius senkrecht treffenden Stoßes, auf. So werden bei beiden Stößen tatsächlich große rotatorische Impulsanteile wirksam mit der erfindungsgemäßen Folge für die geforderte translatorische Impulsverteilung.

Die Doppelausführung der Rotoren dient dem Ausschluss von Nebenimpulsen der Seitenauslenkung. Nach dem vorzugsweise rotationsbeendenden Stoß auf den Übertragungskörper bewegt sich der Rotor - Antriebskörper deutlich verlangsamt noch translatorisch weiter, bis er, wie vorher schon der ihm vorausgeeilte Übertragungskörper, auf die frontale Antriebskammerwand und seine Stoßfangvorrichtungen auftrifft. Dieser Auftreffstoß erfolgt über seitlich an seinem Fahrwerk vorbei vorkragende identische Stoßwangen 3, die ihrerseits symmetrisch zur Beschleunigungsachse angeordnet sind und eine Kraftübertragung im Sinne des zentrischen Stoßes auf die Kammerwand bewirken.

Zwei der drei Elektromotoren des Rotor - Antriebskörpers dienen der Ausführung der rotatorischen Bereitstellungsbewegung jedes der beiden Rotoren. Ansetzend an deren Drehachse werden durch sie die Rotoren gleichförmig bis zur Winkelposition beim Kraftstoß zurückgedreht und dort in Ruhestellung wieder freigegeben. Sollten nach Abschluss der Antriebsbewegungen noch geringe rotatorische Restbewegungen verblieben sein, werden sie vorher ebenfalls durch diese Elektromotoren beendet.

Der ÜBERTRAGUNGSKÖRPER TR ist starr und weist eine kompakte Form und hinreichender Masse auf und ist imstande, einen elastischen Stoß gegen seinen Massenschwerpunkt aufzunehmen und einen unelastischen Stoß aus diesem heraus abzugeben. Er weist eine plane Rückfläche für den näherungsweise senkrechten Stoß durch beide Rotoren auf und andererseits eine Frontalflächengeometrie, vorzugsweise in Form eines Sporns, die auf die Wahl der Bremskräfte abgestimmt ist. Aufgabe des Übertragungskörpers ist es, die rotatorischen Impulse aus dem Rotor - Antriebskörper vollständig als translatorischen Impuls aufzunehmen und zusammen mit dem ebenfalls erhaltenen größeren Teil von dessen translatorischem Impuls auf die frontale Antriebskammerwand zu übertragen.

Die Impulsübertragungen zwischen Rotor - Antriebskörper, Übertragungskörper und Antriebskammerwand erfolgen dreistufig. In der ersten Stufe wird die Rotation der Rotoren vorzugsweise vollständig beendet, in der zweiten Stufe überträgt der Übertragungskörper den aus den Rotoren stammenden nunmehr translatorischen Impuls zusammen mit dem größeren Teil des übernommenen translatorischen Grundimpulses des Rotor - Antriebskörpers auf die Antriebskammerwand und in der dritten Stufe überträgt der Rotor - Antriebskörper seinen translatorischen Restimpuls auf dieselbe Antriebskammerwand. Dabei umgreift er den vor ihm bereits an der Kammerwand ruhenden Übertragungskörper berührungsfrei mit seinen Stoßwangen. Die Zweistufigkeit der translatorischen Impulsübertragung ist auch wirkungsgradbezogen günstig.

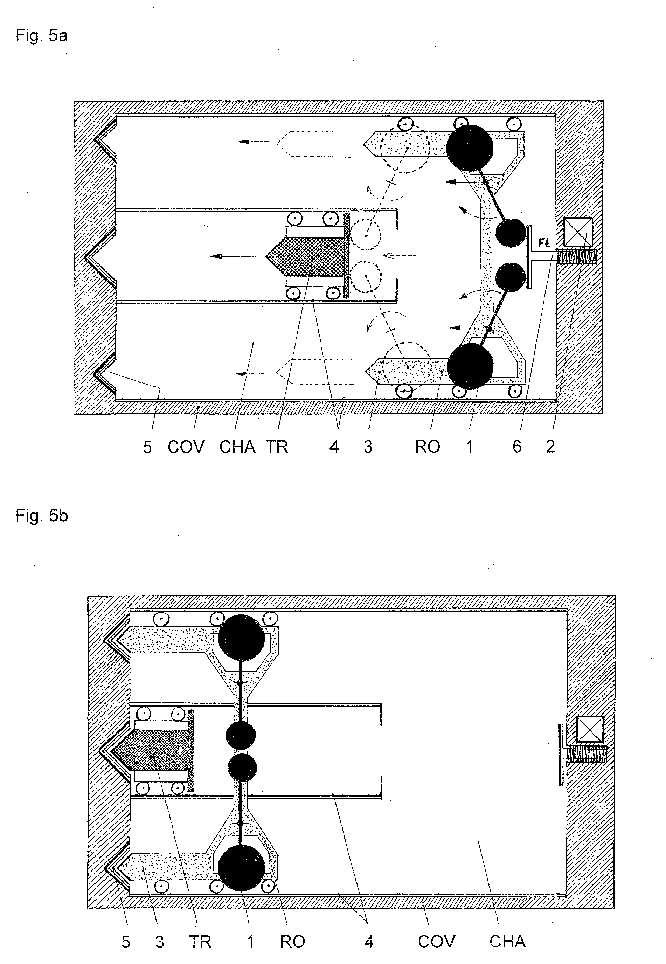

Die Erfindung wird anhand der beigefügten Figuren 4, 5a und 5b näher erläutert, bei denen stets die Antriebskammerwand im Schnitt entlang der Beschleunigungsachse dargestellt ist, der Rotor - Antriebskörper in spiegelbildlicher Anordnung zwei identische Rotoren aufweist und die Antriebsbeschleunigung durch einen einmaligen Kraftstoß erfolgt, wobei
- Fig. 4: die Ausführung mit zwei symmetrischen ring- oder hantelförmigen Rotoren und mit bilateralen Stößen, also einem zentralen Kraftstoßort bei zwei Übertragungskörpern zeigt,
- Fig. 5a: die Ausführung mit zwei asymmetrischen hantelförmigen Rotoren und mit unilateralem Stoß, also dem Kraftstoßort an der Antriebskammerwand bei nur einem Übertragungskörper zeigt und dabei die Situation zu Beginn der Antriebsbewegungen wiedergibt und
- Fig. 5b: die gleiche Ausführung wie Fig. 5a zeigt, dabei jedoch die Situation am Ende der Antriebsbewegungen wiedergibt.

Die Figuren beschränken sich auf wesentliche erfindungsgemäße Elemente und die Darstellung der Antriebsbewegungen. Verzichtet wird auf die Darstellung der Bereitstellungsbewegungen, der dafür erforderlichen Elektromotoren, der Hilfsmittel /Magnete zur Stabilisierung der Ruheposition der bewegten Körper und der versetzten Ebenen der Führungsschienen für Rotor-Antriebs- und Übertragungskörper. Die Figur 4 begnügt sich zudem unter Darstellungsverzicht von Antriebsmotor und Stößel mit der funktionalen Zuordnung des Kraftstoßes.

### Bezugszeichenliste / verwendete Abkürzungen

- R: Rotorkörper = Hantelrotor im Modell des Referenzstoßvorganges
- Rₓ, R_{y}: verbundene Punktmassen des Rotorkörpers R
- B, Bₐ, B_{b}: Punktmassenkörper des Referenzstoßvorganges / des Standardmodells
- +/- p: translatorische Impulse mit Richtungssinn allgemein
- P₀, p_{Rt}, p_{Rr}, p_{R}: translatorische Impulse des Rotorkörpers
- pₐ, p_{b}, p_{Br}, p_{Bt}, Δp: translatorische Impulse der Punktmassenkörper B, Bₐ und B_{b}
- L: rotatorischer Impuls eines Körpers allgemein
- L₀, Lp, L_{0(Rest)}: rotatorische Impulse des Rotorkörpers R
- mBₐ, mB_{b}, mR: Massen der Körper Bₐ, B_{b}, R
- COV: Hüllkörper des Standardmodells / Antriebskammerwand
- Ft: auslösende Beschleunigungskraft / Kraftstoß
- locS1: Ort des Kraftstoßes und Bewegungsbeginn innerhalb des Systems
- locS2: Ort des rotatorisch - translatorischen Doppelstoßes innerhalb des Systems
- locC1: zentraler rückwärtiger Hüllkörperort der Impulsübertragung entgegen der Antriebsrichtung
- locC2: zentraler frontaler Hüllkörperort der Impulsübertragung in Antriebsrichtung
- P_{COV}, P_{comp}, P_{system}: translatorische Impulse des Hüllkörpers COV, des Körperverbundes Bₐ / B_{b} / COV und des Systems beim Standardmodell

- CHA: Antriebskammer, auch Systeminnenraum beim Standardmodell
- RO: Rotor - Antriebskörper
- TR: Übertragungskörper
- 1: Rotor des Rotor - Antriebskörpers
- 2: Elektromotor zur Erzeugung der Antriebsbewegung = Hauptmotor
- 3: Frontale Stoßwangen des Rotor - Antriebskörpers
- 4: Führungsschienen für Rotor - Antriebskörper und Übertragungskörper
- 5: Bremszone / Stoßfangvorrichtung
- 6: Stößel zur Vermittlung des Kraftstoßes

## Patentansprüche

1. Elektromechanisches Antriebssystem, anwendbar für alle Antriebszwecke und Vehikel, vorzugsweise für autonome Flugkörper, bei dem sich als Folge der Zufuhr elektrischer Energie und **dadurch** bewirkter Beschleunigungsarbeit in einer gegen Massenaustausch abgeschlossenen Antriebskammer CA in taktförmiger intervallmäßiger Arbeitsweise mindestens zwei untereinander und mit Antriebskammerwänden COV kinetisch wechselwirkende Festkörper mit ihrer aufeinander abgestimmten Masse entlang einer definierten ebenen translatorischen Bahn unter Richtungsumkehr in einer unbegrenzten Abfolge identischer Bewegungszyklen frei bewegen und bei dem innere Kräfte in der Antriebskammer eine äußere Beschleunigung des Vehikels bewirken, wobei jeder Bewegungszyklus dieser Körper sowohl beschleunigte, energiereiche, impulsbilanzbeeinflussende nach außen gerichtete Antriebsbewegungen aus dem definierten Ausgangszustand, als auch diesen entgegengesetzte, weitgehend gleichförmige, energieschwache, impulsbilanzneutrale Bereitstellungsbewegungen zurück in den definierten Ausgangszustand umfasst und zwischen diesen Bewegungen relative systembezogene Ruhezustände eintreten,
wobei die Antriebsbewegungen dieser Körper in jedem Bewegungszyklus auf eine gemeinsame Startbeschleunigung zurückgehen, welche sich aus der Arbeit von einem oder mehreren Elektromotoren ergibt und für diese Körper zwei entgegengesetzte stetige Übertragungspfade translatorischer Impulse begründet neben der zusätzlichen Rotationsauslösung an einem dieser Körper,
wobei als Folge der Antriebsbewegungen dieser Körper ungleich große translatorische Impulse auf entgegengesetzte Kammerwände übertragen werden und somit auf das Vehikel insgesamt ein resultierender rein translatorischer Antriebsimpuls,
wobei diese Körper starre elastische Körper unterschiedlicher oder gleicher Masse sind, von denen einer als Rotor - Antriebskörper RO zur Ausführung der zusätzlichen Rotationsbewegung allein durch exzentrischen Stoß im Stande ist und von denen der oder die anderen Körper als Übertragungskörper TR Impulse vom Rotor - Antriebskörper aufnehmen und als translatorische Impulse auf eine Antriebskammerwand vermitteln,
wobei die Antriebsbewegung des Rotor - Antriebskörpers stets die Zwischenphase gleichzeitiger rotatorischer und translatorischer Bewegung enthält,
wobei jede Impulsübertragung vom Rotor - Antriebskörper auf einen vorzugsweise ruhenden Übertragungskörper aus seiner gleichzeitigen translatorischen und rotatorischen Bewegung heraus erfolgt, seine rotatorische Bewegung vollständig oder weitgehend beendet, seine translatorische Bewegung unter Richtungssinnwahrung bremst, vorzugsweise aber nicht beendet, und stets alle von ihm weitergegebenen Impulse rein translatorischer Natur sind,
wobei alle antriebsbewegungsbezogenen Wechselwirkungen zwischen Rotor - Antriebskörper, Übertragungskörpern und Antriebskammerwänden Stoßcharakter tragen, alle Stöße zwischen dem Rotor - Antriebskörper und einem Übertragungskörper weitestgehend elastische Stöße sind, dabei exzentrisch aus dem rotierenden Körper und zentrisch auf den Übertragungskörper, und alle Auftreffstöße auf eine Kammerwand unelastische zentrische Stöße sind,
wobei die Bereitstellungsbewegungen von Rotor - Antriebskörper und Übertragungskörpern nach dem Abschluss der Antriebsbewegungen beginnen, durch mehrere voneinander, unabhängige und auch nur ihrem Zustandekommen dienende Elektromotoren ausgeführt werden und im Wechsel mit den Antriebsbewegungen zur zyklischen Arbeitsweise des Antriebssystems führen,
wobei_die Entstehung des resultierenden Antriebsimpulses der Zuführung, dann aber keiner Wandlung und Ableitung kinetischer Energie bedarf, sondern allein Folge der zweimaligen Wechselwirkung zwischen gleichzeitig auftretenden unerschiedlichen Trägheitskräften einerseits und Beschleunigungskräften andererseits bei den beiden exzentrischen Stößen ist, welche am Rotor - Antriebskörper die rotatorische Zwischenbewegung auslösen und beenden,
wobei jegliche Wandlung kinetischer Energie beim unelastischen Auftreffstoß auf eine Antriebskammerwand nur zur Ausführung abgeschlossener Bewegungsintervalle und unbegrenzter zyklischer Arbeitsweise erforderlich ist.

2. Elektromechanisches Antriebssystem nach Anspruch 1, bei dem der Ort der Startbeschleunigung für die Antriebsbewegung des Rotor - Antriebskörpers entweder im Antriebskammerinneren liegt und sich zwischen vorzugsweise zwei Übertragungskörpern befindet oder bei dem sich dieser Ort an der zur Antriebsrichtung rückwärtigen Antriebskammerwand in Nachbarschaft von vorzugsweise nur einem Übertragungskörper befindet.

3. Elektromechanisches Antriebssystem nach den Ansprüchen 1 und 2, bei dem alle Massen jederzeit symmetrisch zur gemeinsamen zentralen Bewegungsachse in der Antriebskammer verteilt sind und die Antriebskammer in Prismenform mit einer jeweils zu dieser zentralen Bewegungsachse senkrechten rückwärtigen und frontalen Wand ausgeführt ist, wobei durch diese Massenverteilung und die Stoßzentrik an rückwärtiger und frontaler Antriebskammerwand die Entstehung rotatorischer Systemimpulse vermieden wird.

4. Elektromechanisches Antriebssystem nach den Ansprüche 1 bis 3, bei dem der oder die Übertragungskörper TR als Wagen so ausgeführt sind, dass sie einen elastischen Stoß gegen ihren Massenschwerpunkt aufnehmen und einen unelastischen Stoß aus ihm heraus abgeben können, dies durch eine geeignete, auf den Bremsvorgang abgestimmte, frontale Form, wobei diese Wagen durch eigene Führungsschienen 4 an der Antriebskammerwand reibungsarm geführt werden und zwar vorzugsweise über ein Fahrwerk nach dem Schiene - Rad - Prinzip.

5. Elektromechanisches Antriebssystem nach den Ansprüchen 1 bis 3, bei dem der Rotor - Antriebskörper RO aus zwei form- und massenidentischen ring- oder hantelförmigen Rotoren 1 besteht, über die allein er die Kräfte zur Ausführung seiner Antriebsbewegungen aufnimmt, die seine alleinigen Stoßvermittler auf einen Übertragungskörper sind, die sich gegensinnig synchron drehen, die synchron Kräfte übertragen, die sich berührungsfrei übereinander, vorzugsweise aber auf gleicher Ebene nebeneinander befinden und die über ihre Drehachsen mit einem Wagen verbunden sind,
wobei dieser Wagen seinerseits durch eigene Führungsschienen 4 an der Antriebskammerwand reibungsarm geführt wird, das vorzugsweise über ein Fahrwerk nach dem Schiene - Rad - Prinzip, und so gemeinsam mit den Rotoren die translatorische Bewegung des Rotor - Antriebskörpers vollzieht und
wobei für seinen Auftreffstoß auf die frontale Antriebskammerwand seitlich vorkragende Stoßwangen 3 ausgeführt sind.

6. Elektromechanisches Antriebssystem nach den Ansprüchen 1 und 5, bei dem jeder Rotor 1 ein hohes Massenträgheitsmoment aufweist, massenreich ist gegenüber dem Wagen des Rotor - Antriebskörpers und an seiner Peripherie für den exzentrischen senkrechten Stoß geeignete Flächen aufweist,
wobei an jedem Rotor Drehachse und Massenschwerpunkt identisch sind,
wobei_hantelförmige Rotoren auch asymmetrisch mit unterschiedlichen Radien und Endmassen ausgeführt sein können und
wobei in diesem Fall der Stoßort des Rotors am schwerpunktfernen Rotorende liegt.

7. Elektromechanisches Antriebssystem nach den Ansprüchen 1 bis 6, bei dem die translatorische Bewegungsstrecke des Rotor - Antriebskörpers mit hantelförmigen Rotoren so auf das Drehverhalten seiner Rotoren abgestimmt ist, dass diese mit ihrem am Stoßort befindlichen Endkörper einen vorzugsweise senkrechten Stoß ausüben.

8. Elektromechanisches Antriebssystem nach den Ansprüchen 1 bis 6, bei dem die Startbeschleunigung für die translatorische Antriebsbewegung des Rotor - Antriebskörpers und für die rotatorische Antriebsbewegung seiner Rotoren aus gemeinsamer oder getrennter Kraftübertragung herrührt, in jedem Falle aber vor dem nachfolgenden Auftreffstoß abgeschlossen ist,
wobei die translatorische Gegenbeschleunigung stets auf die rückwärtige Antriebskammerwand oder einen in deren Richtung gelegenen benachbarten Übertragungskörper wirkt,
wobei_die alleinige Kraftquelle bei gemeinsamer Kraftübertragung oder die anteilige Kraftquelle für die nur translatorische Beschleunigung bei getrennter Kraftübertragung ein Elektromotor oder mehrere Elektromotoren = Hauptmotoren 2 sind, die entweder die Federspannung für vorzugsweise einen kraftstoßübertragenden Stößel erzeugen oder die ein linear beschleunigendes elektromagnetisches Kraftfeld erzeugen,
wobei_sich diese Elektromotoren am Ort der Kraftwirkung befinden, entweder an der rückwärtigen Antriebskammerwand oder in einem rückwärtigen Übertragungskörper oder in den Rotoren selbst und
wobei sich bei getrennter Kraftübertragung die beiden Rotoren allein durch gegenseitige Beschleunigung über dann zusätzliche, vorzugsweise auf die Drehachsen wirkende Elektromotoren in ihre Rotation versetzen.

9. Elektromechanisches Antriebssystem nach den Ansprüchen 1 bis 5, bei dem die den Antriebsimpuls ergebenden Impulsübertragungen entweder durch unelastische Auftreffstöße an rückwärtiger und an frontaler Antriebskammerwand erfolgen, nämlich bei zentrumsnahem Ort der Startbeschleunigung innerhalb der Antriebskammer oder bei dem diese Impulsübertragungen durch direkten Abstoß des Rotor - Antriebskörpers an der rückwärtigen Antriebskammerwand als dem Ort der Startbeschleunigung erfolgen und durch unelastische Auftreffstöße nur an der frontalen Antriebskammerwand.

10. Elektromechanisches Antriebssystem nach den Ansprüchen 1, 4, 5 und 9, bei dem die Ausführung des oder der unelastischen Auftreffstöße eines Übertragungskörpers oder des Wagens des Rotor - Antriebskörpers auf die jeweilige Antriebskammerwand durch geeignete Stoßfangvorrichtungen / Bremszonen 5 erfolgt, die unter beliebiger Wandlung von Bewegungsenergie dem auftreffenden Körper eine notwendige Eindringtiefe ermöglichen und ihn im Ruhezustand am Bremsort halten, wobei_die Stoßfangvorrichtungen / Bremszonen vorzugsweise an den stoßbeteiligten Antriebskammerwänden liegen, aber auch den auftreffenden Körpern zugeordnet sein können.

11. Elektromechanisches Antriebssystem nach den Ansprüchen 1 bis 5, bei dem der Rotor - Antriebskörper und seine Rotoren und der oder die Übertragungskörper jeweils über eigene weitere, nur dafür eingesetzte, Elektromotoren = Nebenmotoren im Verlauf ihrer Bereitstellungsbewegungen gleichförmig an den Ausgangsort und in die Ausgangsstellung vor der nächsten Startbeschleunigung und Antriebsbewegung zurückgeführt und dort in Ruhe gehalten werden und das durch Kraftwirkung auf die Verbindungselemente zu den Führungsschienen, vorzugsweise auf die Radachsen, und auf die Drehachsen der Rotoren.

12. Elektromechanisches Antriebssystem nach den Ansprüchen 1 bis 11, bei dem die an den Elektromotoren und an den Stoßfangvorrichtungen / Bremszonen entstehende Arbeitswärme über eine in der Antriebskammer vorhandene Gasatmosphäre und über die thermisch leitfähigen Antriebskammerwände nach außen abgeleitet wird.
